# EUROPEAN PATENT SPECIFICATION

(11) **EP 3 128 878 B1**
(45) Date of publication and mention of the grant of the patent: **24.10.2018**
(21) Application number: 15722731.5
(22) Date of filing: 08.04.2015
(51) Int. Cl.: A47J 27/14, F16K 1/42, F16K 27/07, A47J 36/14

(54) **OUTLET VALVE FOR INSTITUTIONAL KITCHEN KETTLE**
AUSLASSVENTIL FÜR INSTITUTIONELLEN KÜCHENKESSEL
SOUPAPE DE SORTIE POUR BOUILLOIRE DE CUISINE POUR COLLECTIVITÉS

(30) Priority: 08.04.2014 FI 20145333
(43) Date of publication of application: 15.02.2017
(73) Proprietor: Metos OY AB, 04220 Kerava (FI)
(72) Inventor: LINTUNEN, Paavo, 04430 Järvenpää (FI)
(74) Representative: Sole, Timo
(86) International application number: PCT/FI2015/050239
(87) International publication number: WO 2015/181439

(56) References cited:
- CH-A- 448 780
- GB-A- 2 363 447
- US-A- 1 681 209
- US-A- 3 227 425
- US-A- 5 762 316

## Description

The object of the present invention is an institutional kitchen kettle with an outlet valve, at the bottom of which kettle is an opening, on the edge of which is arranged an elongated cylinder pipe comprising piston means, from which pipe extends an outlet pipe outside the kettle, the outlet valve being comprised of a reduction ring fixed in the bottom opening of the kettle, essentially on the plane of the kettle bottom, and removable therefrom, in the centre of which reduction ring is an opening essentially smaller than the diameter of the bottom opening of the kettle.

In institutional kitchens, such as hospital and central kitchens, restaurants, bakeries and in the food industry, large amounts of food are produced at a time, generally in institutional kitchen kettles, from which the food made is led through an outlet pipe at the bottom of the kettle out of the kettle. However, a problem arises from the fact that in current institutional kitchen kettles, the outlet valve is outside the kettle in the outlet pipe, thus allowing the food being cooked (e.g. potatoes, minced meat, etc.) to pass through the outlet pipe opening at the bottom of the kettle partly also into the outlet pipe, where the food will not be properly cooked and/or may even clog the whole pipe (e.g. rice when it expands).

Institutional kitchen kettles are used, for example, in hot-fill equipment, where hot food is packed in portions into bags which are closed, cooled, and can then be stored in a cold place for several days or even weeks in so-called food banks. Especially in these types of arrangements, the hygiene requirements are high since even a small amount of bacteria, such as botulin bacteria, may in the worst case cause a serious food poisoning epidemic.

Therefore, if the bottom opening of the kettle is to be closed while the food is cooking, it must be possible to clean the closing system easily and thoroughly, for example, by CIP cleaning (= cleaning in place). Until now, no such closing system has, however, been available.

In GB 2 363 447 A it is disclosed an outlet valve for an institutional kitchen kettle. The valve includes a sieve and a tubular plunger. In this valve the plunger is sealed to the main body of the valve. The sieve is fitted slidably within the plunger and the enlarged head of the sieve seals against the upper end of the plunger and, thus, the bottom opening of the kettle is closed by the plunger and sieve. There is no annular slot forming a cylinder chamber between the plunger and main body that would allow the CIP cleaning. Therefore, in practice, the sieve and plunger should be removed from the valve for cleaning purposes.

In CH448780A it is also disclosed an outlet valve for an institutional kitchen kettle. The valve comprises a pipe and piston means moving in the pipe. In this valve piston means is sealed to the pipe by a O-ring and there is no sufficient slot between the outer side of the piston and inner side of the pipe to allow CIP cleaning.

In US5762316 is disclosed a separate valve mechanism to be mounted to a wall of a cooker. The valve mechanism includes a valve seat which, in the mounted position of the valve mechanism, is placed between a housing of the valve mechanism and the wall of the cooker and, thus it cannot be removed without removing the valve mechanism as a whole.

The aim of the invention is to eliminate this disadvantage by providing an institutional kitchen kettle with an outlet valve for closing the bottom opening of an institutional kitchen kettle,
which can be cleaned by CIP cleaning, thus ensuring not only even cooking of the food in the institutional kitchen kettle, but also the fulfilment of hygiene requirements during the use and emptying of the institutional kitchen kettle.

This aim is achieved by means of the institutional kitchen kettle as defined in claim 1 and its method of use as defined in claim 5. The reduction ring is preferably fixed to the bottom opening (2) by screwing, by a bayonet fastening or a snap joint.

The method according to the invention is in turn characterised in that the method includes an operational stage, an emptying stage and a cleaning stage. At the operational stage, a reduction ring is fixed to the bottom opening of the kettle and the piston means arranged in the outlet pipe is lifted up to close the opening in the centre of the reduction ring tightly in order to keep all the food in the kettle during cooking. At the emptying stage of the finished food, the piston means is lowered down, whereby the food is able to pass from the bottom opening of the kettle, through the outlet pipe, out of the kettle. The food is preferably pumped, for example, to hot-fill filling equipment. At the cleaning stage following this, the reduction ring is removed for separate cleaning from the bottom opening of the kettle and the piston means is lifted up so that the washing liquid is able to pass through the slot between the piston means and the cylinder pipe to clean the outlet valve and the outlet pipe. The lifting up of the piston means is preferably prevented during the emptying stage.

The invention is described in greater detail in the following, with reference to the accompanying drawings, in which:
- Figure 1: shows the institutional kitchen kettle according to the invention at the operational stage at which the food is cooked;
- Figure 2: shows the institutional kitchen kettle according to the invention at the food emptying stage; and
- Figure 3: shows the institutional kitchen kettle according to the invention at the cleaning stage.

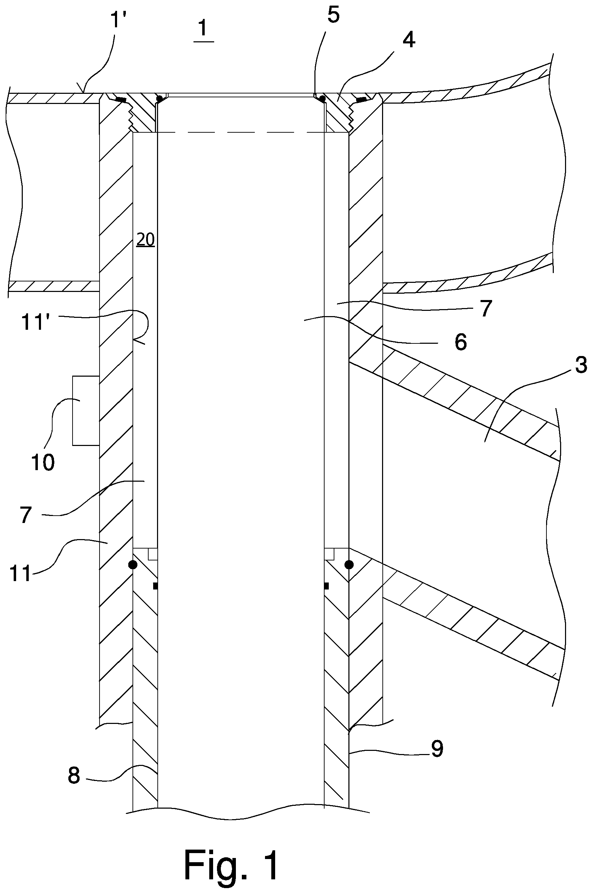

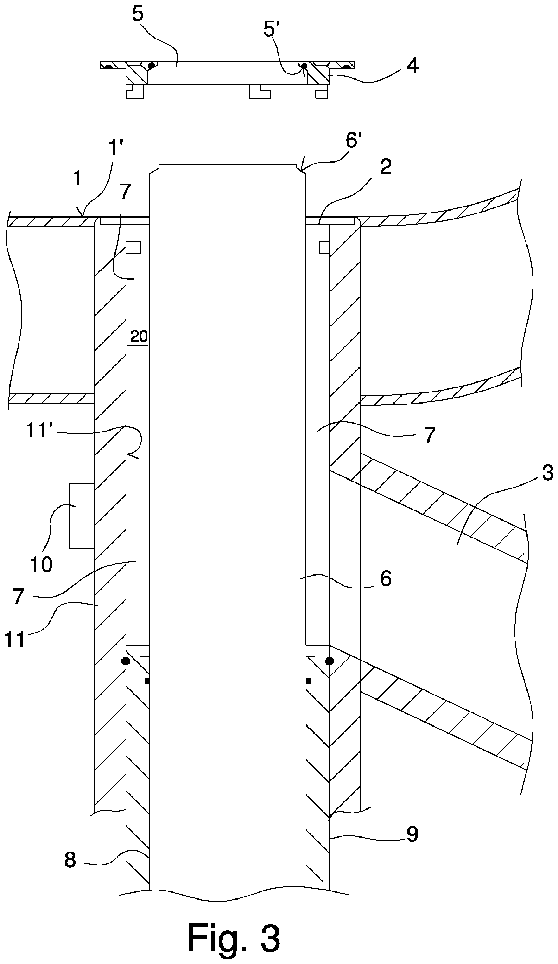

Figure 1 shows the institutional kitchen kettle according to the invention at the operational stage at which the food is cooked. In the bottom opening 2 of the kettle 1 is tightly fixed a reduction ring 4, for example by screwing (Figure 1), by a bayonet fastening (Figure 3) or by a snap joint (not shown). A key may also preferably be used for fastening and releasing the reduction ring 4. The reduction ring 4 has an opening 5 essentially smaller in diameter than the bottom opening 2 of the kettle. On the edge of the bottom opening 2 is arranged an elongated cylinder pipe 11. As an extension of the cylinder pipe 11, on the inside of the cylinder pipe is arranged a piston casing 9, from which a piston means 6 coaxially arranged with respect to the cylinder pipe 11 is moved out (in Figure 1 lifted up) at the food cooking stage in order to tightly close the opening 5 of the reduction ring 4 fixed to the bottom opening 2 of the kettle. Thus, all food will remain in the kettle during the cooking stage, thereby ensuring even cooking of the food and preventing uncooked food from clogging the outlet pipe.

Between the upper edge of the piston casing 9 and the upper edge of the cylinder pipe 11 is formed a cylinder chamber 20 in which the piston means moves by up and down movement. The cylinder chamber 20 is connected at its lower end region to the outlet pipe 3. According to the invention, the diameter of the piston means 6 is selected to be, over the entire axial distance of the cylinder chamber 20 of the cylinder pipe 11, smaller than the diameter of the inner surface 11' of the cylinder chamber to such an extent that between the inner surface 11' and the piston means 6 remains a slot 7 of annular cross-section over the total distance of the cylinder chamber 20.

The largest diameter E of the piston means 6 is essentially smaller than the diameter C of the bottom opening 2 of the kettle and, therefore, of the inner surface 11' of the cylinder chamber 20, and equal to the largest diameter B of the reduction ring 4 opening 5. The end 6' of the piston means 6 is preferably slightly bevelled and thus preferably forms an upwards tapering truncated cone, in which case the diameter D of the end 6' of the piston means is smaller than the diameter E of the body of the piston means 6. There is then a corresponding bevel 5' on the edge of the reduction ring 4 opening 5, in which case on the upper edge of the reduction ring 4, the diameter A of the opening 5 is smaller than the diameter B of the lower part of the opening, thus forming a downwards widening conical seat into which the end 6' of the piston means 6 fits tightly at the cooking stage.

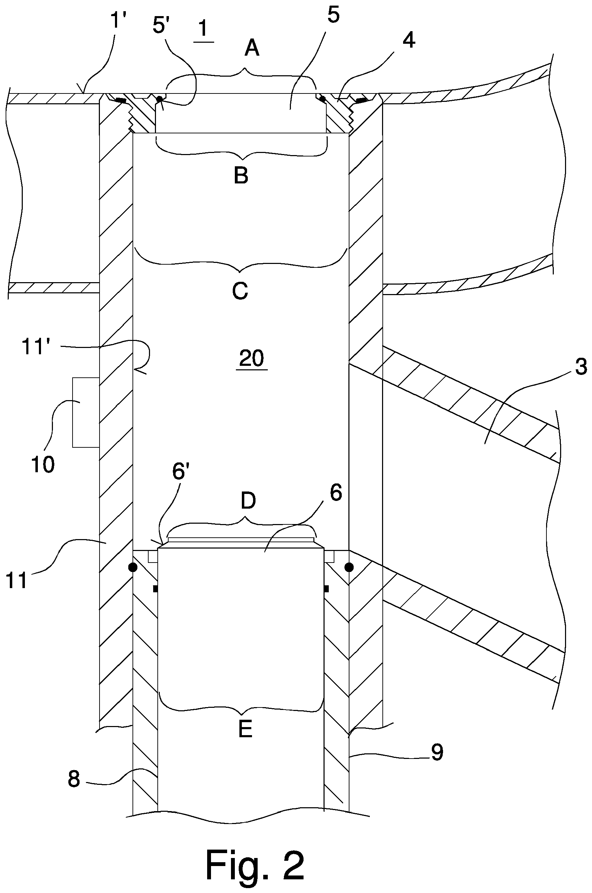

Once the food is cooked, the piston means 6 is moved inside the body 9 (lowered down), into the kettle emptying position, whereupon the food will be able to pass through the reduction ring opening 5, via the cylinder chamber 20, into the outlet pipe 3 (Figure 2). The outlet pipe 3 is arranged in the cylinder chamber 20 wall, at a distance from the bottom opening 2 (opening 5) in the axial direction of the cylinder chamber 20. The outlet pipe 3 is preferably connected, for example, to the pump (not shown) of the batching equipment. At the descending stage of the piston means 6, food is also able to pass onto the outer edges of the piston means 6 before the piston means 6 is fully lowered (inside the body 9). The piston means 6 must, therefore, be cleaned after each emptying stage, before re-use, in order for food collected in the piston means 6 not to cause contamination of a new batch of food during the next time of use.

To clean the kettle 1, the piston means 6 and the outlet pipe 3, the reduction ring 4 is detached and the piston means 6 is lifted up (Figure 3). Thus the annular slot 7 described above opens at its first end to opening 2 and at its second end to the outlet pipe 3. Taking into account that between the cylinder chamber 20 and the piston means 6 remains, over the entire distance of the cylinder chamber 20, a slot 7 which is annular in cross section, this makes possible the supply of washing liquid in a simple manner, at a specific minimum flow rate, through the bottom opening 2 to the outlet pipe 3 for CIP cleaning.

Thus, the cleaning liquid added into the kettle 1, preferably CIP washing solution, is able to rinse the piston means 6, the cylinder chamber 20 and the outlet pipe 3 from the slot 7 between the bottom opening 2 of the kettle 1 and the piston means 6. The washing liquid is circulated by means of a pump back inside the kettle until the required level of cleanliness is reached. The circulation of the washing liquid also cleans the pump itself. The detached reduction ring 4 is washed separately by hand or machine. Before the next time of use, around the piston means 6 still held up is placed a cleaned reduction ring 4 to close the slot 7 and to set the system ready for use. For cleaning, the piston means 6 is preferably lifted somewhat higher than to the normal position of use (Figure 1), preferably 10-50 mm, more preferably 20 mm higher than the position of use (above the kettle 1 bottom 1' level), and lowered by the same amount for fixing the reduction ring into its position of use. This ensures that the piston is cleaned over an area which is slightly longer than the normal position of use (at the point which settles inside the body 9 in normal use), which thus further improves the conditions of hygiene at the food emptying stage.

CIP cleaning requires that the feed rate of the washing liquid is at least 1.5 m/s. This can be achieved partly through the dimensioning of the pump intended for circulating the washing liquid, but in addition to this is required correct dimensioning of the outlet valve according to the invention, for example, in order to achieve the turbulent flow of washing liquid required by efficient CIP cleaning. As a basis of dimensioning may be mentioned that the ratio of the cross-sectional areas of the slot 7 and the outlet pipe 3 is 0.75-1.25, however, preferably not more than 1. In other words, most preferably, the cross-sectional area of the slot 7 does not exceed the surface area of the outlet pipe 3. By way of example may be mentioned that typically, the inner diameter dependent on the cross-sectional area of the outlet pipe 3 is 51 mm. In that case, the cross-sectional area of the annular slot 7 can be implemented in a preferred embodiment of the invention in such a way that the diameter C of the inner surface 11' of the cylinder chamber 20 is 60 mm and the diameter E of the piston means 6 is 32 mm, in which case the difference between the surface areas corresponding to diameters C and E constitutes the cross-sectional area of the slot 7. Depending on the application, the diameter of the outlet pipe 3 may be 30-100 mm and diameters C and E can be defined in many ways as long as the ratio of the cross-sectional areas of the above-mentioned slot 7 and the outlet pipe 3 remains within the said limits. According to this principle, the dimensioning also becomes such that the pressure changes of the washing liquid in the outlet pipe 3 and in the slot 7 will not cause cavitation which wears the structure.

Since food passes to the edges of the piston means 6 at the emptying stage (Figure 2) before the piston means has fully descended, food gradually collects also in the slot 8 between the piston means 6 and the inner surface of the body 9 around it. Therefore, the piston means 6 must be lifted up after every time that it has been lowered and cleaned by CIP cleaning, and be left in the upper position before the next food cooking stage (Figure 1) and the emptying stage (Figure 2) following it, in order that the food collected between the piston means 6 and the body 9 cannot contaminate the food batch to be cooked next.

Lifting the piston means 6 up during emptying, before the kettle has been emptied completely, can preferably be prevented programmatically or technically, thus ensuring the correct use of the device according to the invention to guarantee hygienic cooking, that is, that the piston means 6 is not lifted up before the emptying stage has been completed. This can be carried out simply, for example, by means of a magnetic sensor 10 which identifies the vertical movement of the piston means 6 and requires, for example, that the user must acknowledge that the kettle is completely empty before the piston means 6 can be lifted up for cleaning after the emptying stage. To the identification of the movement of the piston means 6 may be added a warning signal, for example, a light or sound signal.

The piston means 6 and the body 9 of the piston means are preferably also detachable from both the cylinder pipe 11 and each other, thus allowing them to be either washed separately or replaced by completely new parts, if necessary. However, to facilitate use, in the arrangement according to the invention this stage does not have to be carried out after each use but, for example, only in connection with regular maintenance.

The piston means 6 can be driven, for example, by means of levers rotated or turned mechanically by hand, by means of a spring, a motor, a hydraulic or pneumatic actuator or other actuator known as such. On the surfaces of the outlet pipe 3 and/or the piston means 6 and/or the piston means body 9 is, according a preferred embodiment, added a nanocoating or other corresponding self-cleaning and/or antibacterial coating.

The institutional kitchen kettle is preferably used for hot-filling of portions.

## Claims

1. An institutional kitchen kettle (1) with an outlet valve, at the bottom of which kettle is an opening (2), on the edge of which is arranged an elongated cylinder pipe (11) from which pipe extends an outlet pipe (3) outside the kettle, the outlet valve comprising piston means arranged in the cylinder pipe (11) of the kettle (1) and a reduction ring (4) fixed in the bottom opening (2) of the kettle (1), essentially on the plane (1') of the kettle (1) bottom, and removable therefrom, in the centre of which reduction ring is an opening (5) essentially smaller than the diameter of the bottom opening (2) of the kettle (1), wherein the outlet valve comprises a piston casing (9) arranged in the cylinder pipe (11), which piston casing receives an elongated piston means (6) coaxial with the cylinder pipe, the end (6') of the piston means being movable into a position closing the reduction ring (4) opening (5) tightly, that inside the cylinder pipe (11) is formed a cylinder chamber (20) which extends from the bottom opening (2) to the upper edge region of the piston casing (9), that the diameter (E) of the piston means (6) is selected to be, over the entire axial distance of the cylinder chamber (20), smaller than the diameter (C) of the inner surface (11') of the cylinder chamber (20) to such an extent that between the cylinder chamber (20) and the piston means (6) remains a slot (7) of annular cross-section over the total distance of the cylinder chamber (20), the slot opening at its first end to the bottom opening (2) and at its second end to the outlet pipe (3), and making it possible to supply washing liquid at a specific minimum flow rate through the bottom opening (2) to the outlet pipe (3) for CIP cleaning.

2. An institutional kitchen kettle (1) as claimed in claim 1, **characterised in that** the ratio between cross-sectional areas of the slot (7) and of the outlet pipe (3) is at most 1.

3. An institutional kitchen kettle (1) as claimed in claim 1, **characterised in that** the inner diameter of the outlet pipe (3) is within the range 30-100 mm.

4. An institutional kitchen kettle (1) as claimed in any of the claims 1 to 3, wherein the reduction ring (4) is fixed to the bottom opening (2) by screwing, by a bayonet fastening or a snap joint.

5. A method for using the institutional kitchen kettle with an outlet valve as claimed in claim 1, **characterised in that** the method includes an operational stage, an emptying stage and a cleaning stage, wherein:
a) at the operational stage, a reduction ring (4) is fixed to the bottom opening (2) of the kettle (1) and the piston means (6) arranged in the outlet pipe (3) is lifted up to close the opening (5) in the centre of the reduction ring (4) tightly in order to keep all the food in the kettle during cooking,
b) at the emptying stage of the finished food, the piston means (6) is lowered down, whereafter
c) at the cleaning stage, the reduction ring (4) is removed for separate cleaning from the bottom opening (2) of the kettle (1) and the piston means (6) is lifted up to operating height or above it so that the washing liquid will be able to pass through the slot (7) between the piston means (6) and the cylinder chamber (20) to clean the outlet valve and the outlet pipe (3)

6. A method as claimed in claim 5, wherein the lifting up of the piston means (6) is prevented during the emptying stage.

## Patentansprüche

1. Großküchenkessel (1) mit einem Auslassventil, wobei sich am Boden des Kessels eine Öffnung (2) befindet, an deren Rand ein längliches Zylinderrohr (11) angeordnet ist, von dem aus sich ein Auslassrohr (3) außerhalb des Kessels erstreckt, wobei das Auslassventil ein Kolbenmittel umfasst, das im Zylinderrohr (11) des Kessels (1) angeordnet ist, und einen Reduzierring (4), der in der Bodenöffnung (2) des Kessels (1) im Wesentlichen auf der Ebene (1') des Bodens des Kessels (1) befestigt ist und davon abnehmbar ist, wobei in der Mitte des Reduzierrings eine Öffnung (5) ist, die im Wesentlich kleiner ist als der Durchmesser der Bodenöffnung (2) des Kessels (1), wobei das Auslassventil
ein Kolbengehäuse (9) umfasst, das im Zylinderrohr (11) angeordnet ist, wobei das Kolbengehäuse ein längliches Kolbenmittel (6) koaxial mit dem Zylinderrohr aufnimmt, wobei das Ende (6') des Kolbenmittels in eine Position bewegbar ist, die die Öffnung (5) des Reduzierrings (4) fest verschließt, dass innerhalb des Zylinderrohrs (11) eine Zylinderkammer (20) gebildet wird, die sich von der Bodenöffnung (2) bis zum oberen Randbereich des Kolbengehäuses (9) erstreckt, dass der Durchmesser (E) des Kolbenmittels (6) über den gesamten axialen Abstand der Zylinderkammer (20) kleiner als der Durchmesser (C) der Innenfläche (11') der Zylinderkammer (20) derart gewählt ist, dass zwischen der Zylinderkammer (20) und dem Kolbenmittel (6) ein Schlitz (7) mit ringförmigem Querschnitt über den gesamten Abstand der Zylinderkammer (20) verbleibt, wobei sich die Schlitzöffnung an ihrem ersten Ende zur Bodenöffnung (2) und an ihrem zweiten Ende zum Auslassrohr (3) öffnet, und es ermöglicht, Waschflüssigkeit mit einer bestimmten Mindestdurchflussmenge durch die Bodenöffnung (2) zum Abflussrohr (3) für die CIP-Reinigung zuzuführen.

2. Großküchenkessel (1) nach Anspruch 1, **dadurch gekennzeichnet, dass** das Verhältnis zwischen den Querschnittsflächen des Schlitzes (7) und des Auslassrohrs (3) höchstens 1 beträgt.

3. Großküchenkessel (1) nach Anspruch 1, **dadurch gekennzeichnet, dass** der Innendurchmesser des Auslassrohrs (3) im Bereich von 30 bis 100 mm liegt.

4. Großküchenkessel (1) nach einem der Ansprüche 1 bis 3, wobei der Reduzierring (4) an der Bodenöffnung (2) durch Verschrauben, Bajonettverschluss oder Schnappverbindung befestigt ist.

5. Verfahren zur Verwendung des Großküchenkessels mit einem Auslassventil nach Anspruch 1, **dadurch gekennzeichnet, dass** das Verfahren eine Betriebsphase, eine Entleerungsphase und eine Reinigungsphase aufweist, wobei:
a) in der Betriebsphase ein Reduzierring (4) an der Bodenöffnung (2) des Kessels (1) befestigt wird, und das Kolbenmittel (6), das im Auslassrohr (3) angeordnet ist, angehoben wird, um die Öffnung (5) in der Mitte des Reduzierrings (4) fest zu verschließen, um alle Speisen während des Kochens im Kessel zu halten,
b) in der Entleerungsphase des fertigen Nahrungsmittels das Kolbenmittel (6) abgesenkt wird, wonach
c) in der Reinigungsphase der Reduzierring (4) zur separaten Reinigung von der Bodenöffnung (2) des Kessels (1) entfernt wird und das Kolbenmittel (6) auf Arbeitshöhe oder darüber angehoben wird, so dass die Waschflüssigkeit in der Lage ist, den Schlitz (7) zwischen dem Kolbenmittel (6) und der Zylinderkammer (20) zu passieren, um das Auslassventil und das Auslassrohr (3) zu reinigen.

6. Verfahren nach Anspruch 5, wobei das Anheben des Kolbenmittels (6) während der Entleerungsphase verhindert wird.

## Revendications

1. Marmite de cuisine institutionnelle (1) avec soupape de sortie, au fond de laquelle marmite figure une ouverture (2), sur le bord de laquelle est agencé un tuyau cylindrique allongé (11) duquel tuyau s'étend un tuyau de sortie (3) hors de la marmite, la soupape de sortie comprenant un moyen de piston agencé dans le tuyau cylindrique (11) de la marmite (1) et une bague réductrice (4) fixée dans l'ouverture de fond (2) de la marmite (1), essentiellement sur le plan (1') du fond de la marmite (1), et amovible de celui-ci, au centre de laquelle bague réductrice figure une ouverture (5) essentiellement plus petite que le diamètre de l'ouverture de fond (2) de la marmite (1), dans laquelle la soupape de sortie comprend un carter de piston (9) agencé dans le tuyau cylindrique (11), lequel carter de piston reçoit un moyen de piston allongé (6) coaxial avec le tuyau cylindrique, l'extrémité (6') du moyen de piston étant mobile jusque dans une position fermant l'ouverture (5) de la bague réductrice (4) de manière serrée, qu'à l'intérieur du tuyau cylindrique (11) est formée une chambre cylindrique (20) qui s'étend de l'ouverture de fond (2) jusqu'à la région du bord supérieur du carter de piston (9), que le diamètre (E) du moyen de piston (6) est sélectionné pour être, sur toute la distance axiale de la chambre cylindrique (20), plus petit que le diamètre (C) de la surface intérieure (11') de la chambre cylindrique (20) dans une telle mesure qu'entre la chambre cylindrique (20) et le moyen de piston (6), il reste une fente (7) de section annulaire sur la distance totale de la chambre cylindrique (20), la fente ouvrant à sa première extrémité vers l'ouverture de fond (2) et à sa seconde extrémité vers le tuyau de sortie (3) et rendant possible de fournir du liquide de lavage à un débit minimal spécifique par l'ouverture de fond (2) vers le tuyau de sortie (3) pour le nettoyage NEP.

2. Marmite de cuisine institutionnelle (1) selon la revendication 1, **caractérisée en ce que** le rapport entre les zones de section transversale de la fente (7) et du tuyau de sortie (3) est de 1 au plus.

3. Marmite de cuisine institutionnelle (1) selon la revendication 1, **caractérisée en ce que** le diamètre intérieur du tuyau de sortie (3) est situé dans la plage de 30 à 100 mm.

4. Marmite de cuisine institutionnelle (1) selon l'une quelconque des revendications 1 à 3, dans laquelle la bague réductrice (4) est fixée à l'ouverture de fond (2) par vis, par fixation à baïonnette ou snap-joint.

5. Procédé pour utiliser la marmite de cuisine institutionnelle avec soupape de sortie selon la revendication 1, **caractérisé en ce que** le procédé inclut une étape opérationnelle, une étape de vidage et une étape de nettoyage, dans lequel :
a) à l'étape opérationnelle, une bague réductrice (4) est fixée sur l'ouverture de fond (2) de la marmite (1) et le moyen de piston (6) agencé dans le tuyau de sortie (3) est soulevé pour fermer l'ouverture (5) au centre de la bague réductrice (4) de manière serrée afin de maintenir tous les aliments dans la marmite durant la cuisson,
b) à l'étape de vidage des aliments préparés, le moyen de piston (6) est abaissé, après quoi
c) à l'étape de nettoyage, la bague réductrice (4) est retirée de l'ouverture de fond (2) de la marmite (1) pour le nettoyage séparé et le moyen de piston (6) est soulevé à la hauteur opérationnelle ou au-dessus de façon à ce que le liquide de lavage puisse passer à travers la fente (7) entre le moyen de piston (6) et la chambre cylindrique (20) pour nettoyer la soupape de nettoyage et le tuyau de sortie (3).

6. Procédé selon la revendication 5, dans lequel le soulèvement du moyen de piston (6) est empêché durant l'étape de nettoyage.
